Europäisches Patentamt

European Patent Office

Office européen des brevets

(19)

(11) Veröffentlichungsnummer: **0 328 731**
**A1**

# (12) EUROPÄISCHE PATENTANMELDUNG

(21) Anmeldenummer: 88114827.4

(22) Anmeldetag: 09.09.88

(51) Int. Cl.4: **A47J 41/02** , **B65D 51/16**

(30) Priorität: 17.02.88 DE 3804912

(43) Veröffentlichungstag der Anmeldung:
23.08.89 Patentblatt 89/34

(84) Benannte Vertragsstaaten:
**AT BE CH DE ES FR GB GR IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Königsberger Strasse 11**
**D-6434 Niederaula(DE)**

(74) Vertreter: **Körber, Wolfhart, Dr. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**D-8000 München 22(DE)**

(54) **Isoliergefäss, insbesondere Isolierkanne.**

(57) Bei einem Isoliergefäß mit einem Gehäuse (2), dessen Füllraum (27) durch einen mittels einer elastischen Dichtung (13) und einer Dichtungsfläche (18,19) abgedichteten Deckel (4) verschließbar ist, soll ein Druckausgleich zwischen dem Füllraum (27) des Isoliergefäßes (1) und dessen Umgebung erreicht bzw. der Einweckeffekt vermieden werden. Dies wird dadurch erreicht, daß die Dichtungsfläche (18) wenigstens eine, durch eine Unebenheit (28) gebildete Stelle (26) verringerten Anlagedruckes aufweist.

FIG.4

EP 0 328 731 A1

## Isoliergefäß, insbesondere Isolierkanne

Die Erfindung bezieht sich auf ein Isoliergefäß nach dem Oberbegriff des Anspruchs 1.

Der wesentliche Zweck eines Isoliergefäßes besteht darin, die Temperatur des Füllgutes möglichst lange beizubehalten. Dies gilt für ein Speisegefäß, das zur Aufnahme von sowohl festem als auch flüssigem Füllgut dient, und auch für eine Isolierkanne, die eigentlich nur zur Aufnahme von flüssigem Füllgut geeignet ist.

Dabei kann die Verwendung des Isoliergefäßes bzw. der Isolierkanne darin bestehen, das Füllgut sowohl vor Abkühlung (warme Speisen und warme Getränke) als auch Erwärmung (kalte Speisen und kalte Getränke) zu schützen.

Mittels der zwischen dem Deckel und dem Gehäuse vorgesehenen Dichtung läßt sich das Isoliergefäß dicht verschließen, so daß auch bei schrägen Stellungen des Isoliergefäßes ein Auslaufen des Füllgutes vermieden ist. Da die Isolierung eines Isoliergefäßes nur beschränkt ist und deshalb über einen längeren Zeitraum hin ein Wärmeaustausch zwischen der das Isoliergefäß umgebenden Wärme und der im Füllraum des Isoliergefäßes befindlichen Wärme und somit eine Temperaturangleichung stattfindet, kommt es bei einem dichten Verschluß des Isoliergefäßes zu unterschiedlichen Drücken im Füllraum des Isoliergefäßes, die durch die Wärmedehnung bzw. -kontraktion des Füllgutes und der den Freiraum des Füllraums ausfüllenden Luft bei Erwärmung bzw. Abkühlung entstehen. Dabei kann es sich um Über- oder Unterdruck handeln. Ein Überdruck wird entstehen, wenn ein Füllgut eingefüllt wird, dessen Temperatur niedriger ist als die Umgebungstemperatur. Ein Unterdruck wird sich dann einstellen, wenn ein Füllgut mit einer gegenüber der Umgebungstemperatur höheren Temperatur eingefüllt wird. Außerdem kann ein Überdruck durch Verdampfung des Füllgutes entstehen, was sich insbesondere nach dem Einfüllen und dichten Verschließen von heißen Flüssigkeiten einstellt.

Sowohl ein Überdruck als auch ein Unterdruck ist unerwünscht, weil hierdurch die Handhabung des Isoliergefäßes beeinträchtigt wird. Beim Vorhandensein eines Überdrucks entweicht dieser beim Öffnen des Isoliergefäßes, wobei dieses sowohl optisch als entweichender Dampf oder auch akkustisch als Geräusch wahrnehmbar ist. Ein Unterdruck führt zu einem Einweckeffekt, der das Öffnen des Deckels beeinträchtigt und außerdem ebenfalls zu unangenehmen Geräuschen beim Öffnen des Isoliergefäßes führt.

Der Erfindung liegt die Aufgabe zugrunde, ein Isoliergefäß der eingangs bezeichneten Art so auszugestalten, daß ein Druckausgleich erreicht bzw. der Einweckeffekt vermieden werden kann.

Diese Aufgabe wird durch die kennzeichnenden Merkmale des Anspruchs 1 gelöst.

Bei der erfindungsgemäßen Ausgestaltung kann aufgrund des Vorhandenseins der Stelle verminderten Anlagedruckes fortwährend ein Druckausgleich zwischen dem Füllraum und der Umgebung des Isoliergefäßes stattfinden und zwar sowohl bei Über- als auch Unterdruck im Füllraum. Dabei empfiehlt es sich, die Stelle in ihrem Querschnitt so gering wie möglich auszubilden, da schon eine sehr kleine Stelle den angestrebten Druckausgleich gewährleistet. Dies ist darauf zurückzuführen, daß eine Temperaturangleichung zwischen der Temperatur des Füllraums und der Umgebungstemperatur langsam stattfindet, so daß auch eine kleine Stelle ausreicht, einen sich allmählich aufbauenden Druckunterschied auszugleichen.

Die erfindungsgemäße Funktion ist mit einem Einweckvorgang zu vergleichen, der ohne Druckausübung auf den Deckel des Einweckglases durchgeführt wird. Ohne eine solche Druckausübung läßt sich das Einwecken nicht erzielen, da ein Druckaustausch zwischen dem Innenraum des Einweckglases und der Umgebung stattfindet. Der beim Einwecken negative Effekt wird bei der Erfindung als positiver Effekt ausgenutzt.

Die Verminderung des Anlagedruckes im Bereich der erfindungsgemäßen Stelle kann so groß werden, daß der Anlagedruck Null wird. Dies reicht zumindest für dickflüssiges oder festes Füllgut völlig aus.

Es ist im Rahmen der Erfindung auch möglich, den Anlagedruck so weit zu verringern, daß im Bereich der Unebenheit keine Anlage der Dichtung an der Dichtungsfläche besteht, wodurch eine Dichtungs-Unterbrechung im Sinne eines Durchganges geschaffen wird, durch die bzw. den der Druckaustausch gewährleistet ist. Eine solche Ausgestaltung ist für flüssiges und festes Füllgut insbesondere dann ausreichend, wenn die Dichtungs-Unterbrechung auf der dem Griff des Gefäßes zugewandten Seite, vorzugsweise nahe dem Griff angeordnet ist (Anspruch 3).

Die Stelle verminderten Anlagedruckes läßt sich in einfacher Weise gemäß Anspruch 2 durch eine Rille oder einen Steg in der vorhandenen Dichtungskante bzw. -fläche verwirklichen.

Dabei kann die Dichtungs-Unterbrechung gemäß Anspruch 4 am Dichtungsring, am Deckel und/oder am Gehäuse angeordnet sein. Es ist vorteilhaft, die Stelle so hoch wie möglich im Isoliergefäß anzuordnen. Deshalb besteht eine bevorzugte Ausgestaltung darin, die Stelle am Deckel und/oder - bei einem sich zwischen dem Deckel und dem Gehäuse horizontal erstreckenden Dichtungsring - an der Oberseite des Dichtungsrings anzuordnen.

Für die erfindungsgemäße Ausgestaltung eignet sich insbesondere ein Dichtungselement nach den Ansprüchen 6 bis 8, um eine gute Abdichtung zu gewährleisten.

Die Ausgestaltung nach Anspruch 8 eignet sich insbesondere für die Warmhaltung von Flüssigkeiten und zwar deshalb, weil diese Dichtung in einer Richtung von innen nach außen auch plötzlich auftretende Druckvergrößerungen auszugleichen vermag, weil die Dichtungslippe durch den erhöhten Druck von der Dichtungsfläche abgehoben wird. Eine solche mehr oder weniger plötzliche Druckerhöhung wird durch Dampfbildung hervorgerufen.

Die Ausbildung nach Anspruch 9 ermöglicht ein sattes Anliegen der Dichtungslippe in der Unebenheit.

Nachfolgend wird die Erfindung anhand eines in einer Zeichnung dargestellten bevorzugten Ausführungsbeispiels näher erläutert. Es zeigt:

Fig. 1 eine erfindungsgemäß ausgestaltete Isolierkanne mit einem Schraubstopfen im teilweisen senkrechten Schnitt;

Fig. 2 und 3 in vergrößerter Darstellung das zwischen dem Schraubstopfen und dem Gehäuse der Isolierkanne wirksame Dichtungselement im axialen Schnitt;

Fig. 4 eine in Fig. 1 mit E gekennzeichnete Einzelheit im horinzontalen Schnitt und in vergrößerter Darstellung;

Fig. 5 die Einzelheit in der Seitenansicht von rechts (Pfeil V) auf den Schraubstopfen;

Fig. 6 und 7 der Fig. 5 entsprechende Ansichten einer abgewandelten Ausgestaltung der Isolierkanne.

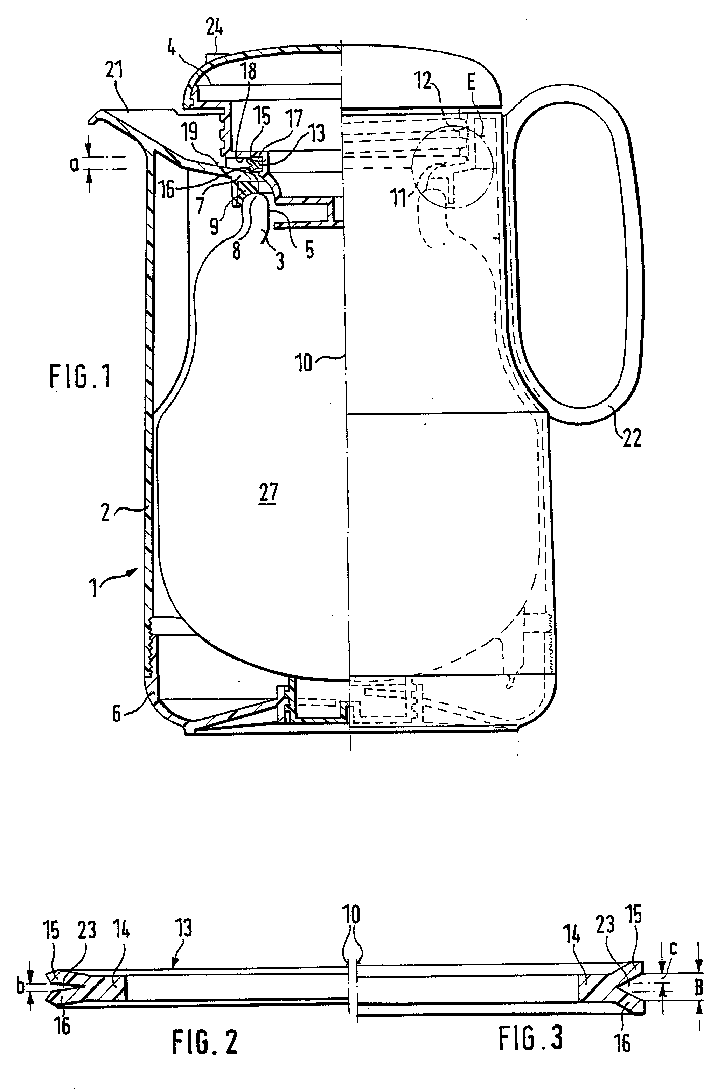

Die in Fig. 1 allgemein mit 1 bezeichnete Isolierkanne besteht aus dem Gehäuse 2, einem darin aufgenommenen Isoliereinsatz 3 und dem Schraubstopfen 4, mit dem die Füllöffnung 5 der Isolierkanne 1 verschließbar ist.

Der Isoliereinsatz 3, bei dem es sich um ein doppelwandiges, evakuiertes Glasgefäß handelt, ist zwischen einem einschraubbaren Bodenteil 6 und einer inneren Schulter 7 des Gehäuses 2 eingespannt, wobei zwischen dem Rand 8 des Isoliereinsatzes 3 und der Schulter 7 ein Dichtungsring 9 angeordnet ist. Die die Füllöffnung 5 umgebende Schulter 7 bildet den Boden einer oberseitigen runden Ausnehmung 11 im Gehäuse 2, in die der Schraubstopfen 4 aufgrund eines in der Innenumfangsfläche der Ausnehmung vorhandenen Gewindes 12 einschraubbar ist, das wie üblich ein Bewegungsspiel aufweist.

An der Unterseite des Schraubstopfens 4 ist ein im Querschnitt· Y-förmiges Dichtungselement 13 in Form eines Ringes angeordnet, wobei bezüglich der Mittelachse (10) der Isolierkanne 1 der Steg 14 der Y-Form radial nach innen und die beiden Dichtungslippen 15, 16 bildenden Schenkel im wesentlichen schräg nach außen weisen.

Der Dichtungsring 13 ist mit seinem Steg 14 in einer Umfangsnut 17 am Schraubstopfen 4 gehalten, wobei in der in Fig. 1 dargestellten Schließstellung des Schraubstopfens 4 die letzterem zugewandte Dichtungslippe 15 mit einer unterseitigen, im wesentlichen radialen Stufenfläche 18 des Schraubstopfens 4 und die dem letzteren abgewandte Dichtungslippe 16 mit der im wesentlichen radialen Oberseite 19 der Schulter 7 dichtend zusammenwirkt. In der in Fig. 3 dargestellten Offenstellung des Dichtungsrings 13 befindet sich die Dichtungslippe 16 in einem in Fig. 1 mit a bezeichneten Abstand von der Oberseite 19 der Schulter 7, so daß ein Ringspalt zum Ausgießen mit einem seitlich von der Ausnehmung 11 ausgehenden, einstückig an das Gehäuse angeformten Ausgießer 21 geschaffen ist. Zur Handhabung der Kanne dient ein dem Ausgießer 21 diametral gegenüberliegender, ebenfalls einstückig an das Gehäuse 2 angeformter Griff 22.

Die Fig. 1 und 2 zeigen die Querschnittsform des Dichtungsrings 13 in der Schließstellung des Schraubstopfens 4. Der zwischen den Dichtungslippen 15,16 vorhandene Freiraum 23 bzw. Abstand ermöglicht eine Biegung der Dichtungslippen 15,16 jeweils in Richtung auf die andere Dichtungslippe. Die Biegespannung jeder Dichtungslippe 15,16 ist größer bemessen, als die Spannung, die die im Isoliereinsatz 3 vorhandene Flüssigkeit auf die Dichtungslippen 15,16 auszuüben vermag, wodurch die Abdichtung gewährleistet ist, egal, wie weit die Dichtungslippen 15,16 eingebogen sind. Der Unterschied zwischen dem größten Abstand B und dem kleinsten Abstand b zwischen den Dichtungslippen 15,16 der den Biegeweg der jeweiligen Dichtungslippe darstellt und theoretisch 0 sein kann, ist in Fig. 3 mit c bezeichnet. Durch die Beweglichkeit der Dichtungslippen 15,16 ist der Dichtungsring 13 an verhältnismäßig große Maßunterschiede automatisch anpaßbar, ohne daß mit einer Beeinträchtigung der Abdichtung zu rechnen ist. Solche Maßunterschiede können sowohl auf Unebenheiten der Oberseite 19 beruhen als auch auf unterschiedlichen Abständen der Dichtungslippe 16 von Bezugskanten des Gehäuses bezüglich der Schließstellung des Schraubstopfens 4, in der eine Markierung 24 in Form einer runden Erhebung sich in der Schließstellung auf der dem Ausgießer 21 zugewandten Seite direkt am Ausgießer, d.h. auf einer durch den Ausgießer 21 gehenden Radiallinie befindet.

Außerdem ermöglicht die erfindungsgemäße Ausgestaltung eine leichte Handhabung, weil das Dichtungselement nicht komprimiert werden muß, wie es beim Stand der Technik der Fall ist.

Ein anderer Vorteil der erfindungsgemäßen Ausgestaltung besteht darin, daß die Schließstellung eines Schraubstopfens 4 in Bezug auf das Gehäuse 2 vorbestimmt werden kann, ohne daß bei üblichen Maßunterschieden die Abdichtung beeinträchtigt wird. Dies ist aufgrund der Beweglichkeit der Dichtungslippen 15,16 gewährleistet.

Es ist somit auch möglich, dem Schraubstopfen 4, hierbei könnte es sich auch um einen Stopfen mit Bajonettverschluß handeln, einen festen Anschlag in seiner Schließstellung oder auch in seiner Offenstellung zuzuordnen, ohne daß zu befürchten ist, daß bei ungünstigen Maßunterschieden der für eine befriedigende Abdichtung erforderliche Andruck nicht erreicht wird.

Um negative und positive Maßunterschiede auszugleichen, ist zu empfehlen, die Isolierkanne 1 so auszubilden, daß in der Schließposition die Dichtungslippen 15,16 sich bezüglich ihres Biegebereichs in ihrer Mittelstellung befinden.

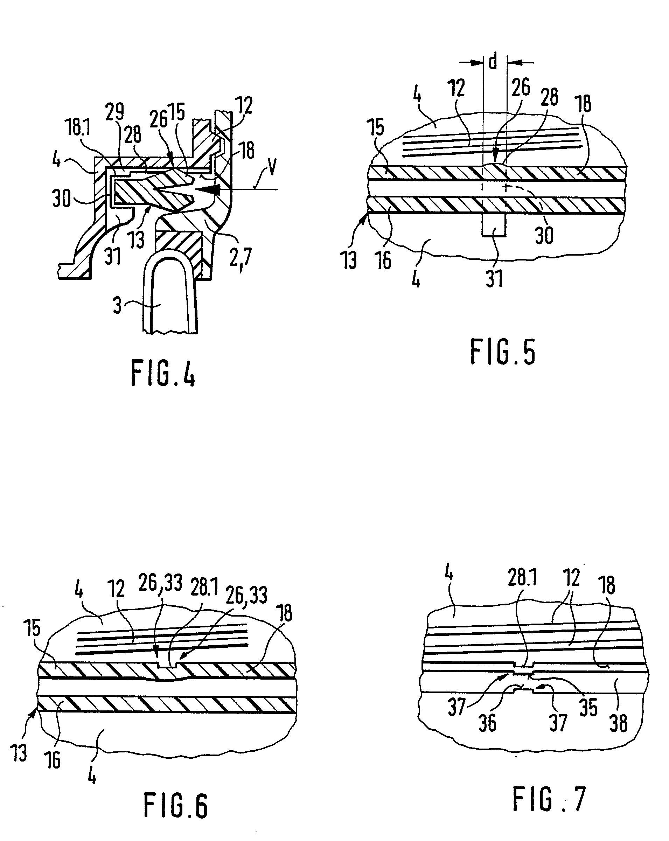

Die Dichtung zwischen dem Schraubstopfen 4 und dem Gehäuse 2 weist eine allgemein mit 26 bezeichnete, der Deutlichkeit wegen nur in den Fig. 4 und 5 dargestellte Stelle verringerten Anlagedruckes in der Schließstellung zwischen zwei zueinander gehörigen Dichtungsflächen auf, so daß auch im abgedichteten Zustand, d.h. in der Schließstellung des Schraubstopfens 4, ein Druckausgleich zwischen dem mit 27 bezeichneten Füllraum und der Umgebung der Isolierkanne 1 stattfinden kann. Die Fig. 4 und 5 zeigen ebenfalls die Schließstellung des Schraubstopfens 4.

Diese Stelle 26 verringerten Anlagedruckes ist durch eine Unebenheit, hier eine radiale Rille 28 in einer der Dichtungsflächen oder -lippen 15,16 gebildet und beim vorliegenden Ausführungsbeispiel in der die Dichtungsfläche darstellenden Stufenfläche 18 des Schraubstopfens 4 angeordnet. Bei einer Ausgestaltung, bei der das Dichtungselement 13 mit Bewegungsspiel in der Umfangsnut 17 aufgenommen ist, reicht schon allein die Rille 28 aus, um durch die Rille 28 den angestrebten Druckausgleich zwischen dem Füllraum 27 und der Umgebung der Isolierkanne 1 zu gewährleisten, da aufgrund des Bewegungsspiels des Dichtungselements 13 in der Umfangsnut 17 eine Luftströmung zwischen der Rille 28 und der Füllraum 27 erfolgen kann. Es ist jedoch vorteilhaft, zwischen der Rille 28 und dem Füllraum Z7 einen Bypaß vorzusehen, um der Gefahr vorzubeugen, daß das Dichtungselement 13 eine Verbindung zwischen der Rille 28 und dem Füllraum 27 (durch dichte Anlage an Umfangsnutwänden) behindern könnte.

Beim vorliegenden Ausführungsbeispiel wird ein solcher Bypaß durch Rillenfortsetzungen 29,30,31 im Bereich der drei vorhandenen Wände der Umfangsnut 17 gebildet, wobei die Rillenfortsetzung 29 in einer Stufe 18.1 der Stufenfläche 18 gebildet ist, wobei die Stufe so groß bemessen ist, daß bei Anlage des Dichtungselementes an ihr die Dichtungslippe 15 eingebogen ist. Durch die Rillenfortsetzungen 29,30,31 ist der eingangs beschriebene, angestrebte Druckausgleich auch bei dichter Anlage des Dichtungselements 13 an wenigstens einer Wand der Umfangsnut 17 gewährleistet.

Die Rille 28 ist ziemlich flach und schmal ausgebildet (vgl. Fig. 5) und vorzugsweise gerundet. Die Breite der Rille d beträgt beim vorliegenden Ausführungsbeispiel etwa 3 mm. Die Tiefe ist nach der Weichheit bzw. Elastizität der zugehörigen Dichtungslippe 15 zu bemessen und beträgt vorzugsweise nur einen Bruchteil eines Millimeters, etwa 0,1 bis 0,5 mm. Bei einer solchen Ausgestaltung legt sich die Dichtungslippe 15 in der Schließstellung des Schraubstopfens 4 in die Rille 28 hinein, wodurch die Abdichtung gegen einen Auslauf des in den Füllraum 27 eingefüllten Füllgutes gewährleistet ist. Trotzdem kann der Druckausgleich stattfinden, weil die Dichtungslippe 15 im Bereich der Rille 28 mit einem verringerten Druck an der die Dichtungsfläche bildenden Stufenfläche 18 anliegt. Aufgrund der Anlage mit verringertem Druck wird der Einweckeffekt verhindert, da der im Füllraum 27 durch Abkühlung des Füllgutes sich einstellende Unterdruck allmählich entsteht und im Bereich der Rille 28 eine Nachsaugung stattfindet. Dieser Effekt ist zu vergleichen mit einem Einweckvorgang bei Einweckgläsern, bei dem ohne Druck auf den Deckel des Einweckglases eingeweckt werden würde. Ohne einen Druck auf den Deckel läßt sich das Einwecken nicht erzielen, da ein Druckaustausch zwischen dem Füllraum des Einweckglases und der Umgebung stattfindet. Dieser beim Einwecken negative Effekt wird bei der Erfindung als positiver Effekt ausgenutzt.

In der Öffnungsstellung des Schraubstopfens 4, in die der Schraubstopfen 4 um 180° gedreht wird, befindet sich die Markierung 24 und die Rille 28 bzw. die Rillen 28 bis 31 unmittelbar neben dem Griff 22.

Es ist von Vorteil, die Spannung der Dichtungslippe 15 mit der sie in der Schließstellung des Schraubstopfens 4 gegen die Stufenfläche 18 drückt, so zu bemessen, daß der im Bereich der Rille 28 vorhandene, verminderte Anlagedruck wenigstens gleich oder größer ist als der von der im Füllraum 27 aufgenommenen Flüssigkeit (bei Schrägstellung) auf die Dichtungslippen 15,16 wirksame Druck. Hierdurch ist auch im Bereich der Rille 28 die Abdichtung gewährleistet.

Beim Ausführungsbeispiel nach Fig. 6 und 7 ist anstelle der radialen Rille 28 ein im wesentlichen radial verlaufender Steg 28.1 auf der Dichtungs- bzw. Stufenfläche 18 vorgesehen, gegen den das Dichtungselement 13, hier die Dichtungslippe 15, anliegt. Je nach Ausführung des Stegs 28.1 in gerundeter oder in eckiger bzw. stufenförmiger Form ergeben sich in den zu beiden Seiten vorhandenen hohlen Ecken 33 - die mit Rillen zu vergleichen sind - Stellen 26 verringerten Anlagedrucks, wodurch der Einweckeffekt verhindert wird. Bei der in Fig. 6 dargestellten Ausgestaltung ist der Steg 28.1 eckig bzw. stufenförmig ausgeführt, wobei die Höhe des Stegs gering bemessen ist, nämlich etwa 0,1 bis 0,5 mm, vorzugsweise etwa 0,3 mm. Bei beiden vorbeschriebenen Ausgestaltungen trifft es zu, daß aufgrund des verringerten Anlagedruckes die Dichtung zwar flüssigkeitsdicht aber nicht gasdicht ist und deshalb der Einweckeffekt verhindert wird.

Im Rahmen der Erfindung ist es auch möglich, daß sich der Anlagedruck so weit reduziert, z.B. bei einer tieferen Rille 28, daß das Dichtungselement 13 am Grund der Rille 28 oder hier in den Ecken 33 nicht mehr anliegt und sich somit freie Durchgänge geringen Querschnitts ergeben. Durch diese Durchgänge kann die Abdichtung der Isolierkanne zwar beeinträchtigt sein, jedoch kann dies in Kauf genommen werden, da zum einen an eine Isolierkanne nicht zu hohe Anforderungen gestellt werden wie z.B. an eine Isolierflasche, die zwecks Verpackung auch in liegender Position unterbringbar sein soll, und zum anderen die Rille 28 oder der Steg 28.1 bzw. die Ecken 33 sich in der Schließposition des Schraubstopfens 4 auf der dem Ausgießer 21 gegenüberliegenden Seite befinden, wo in der zum Ausgießen erforderlichen Schräglage der Isolierkanne 1 der Flüssigkeitsspiegel sich unterhalb des Stegs 28 befindet, so daß die Flüssigkeit durch eine solche Dichtungsunterbrechung bzw. Durchgang gar nicht austreten kann. Außerdem ergeben sich Durchgänge sehr geringen Querschnitts, so daß ein Leck kaum zu merken ist.

Es ist auch möglich, den Steg 28.1 radial schräg, nämlich sekantial, verlaufen zu lassen.

Auch bei der Ausgestaltung nach Anspruch 6 ist es erforderlich, daß der Druckausgleich sich im Bereich der Halterung für das Dichtungselement 13 fortsetzen kann. Bei einer Anordnung des Aufnahmestegs 14 in einer Aufnahmenut mit verhältnismäßig viel Spiel ergibt sich automatisch ein freier Durchgang für die erforderliche Luftströmung im Bereich der Dichtungsringhalterung. Insbesondere bei einem verhältnismäßig eng in der Aufnahmenut aufgenommenen Dichtungsring ist es vorteilhaft, im Bereich des Stegs 28.1 entweder Rillenfortsetzungen 29, 30, 31 wie beim ersten Ausführungsbeispiel oder Stege 35, 36 auf den Wänden der Aufnahmenut vorzusehen, die im Bereich ihrer Ecken freie Durchgänge 37 bilden, durch die hindurch der Druckausgleich bzw. eine Luftströmung stattfinden kann. Beim Ausführungsbeispiel gemäß Fig. 7, bei dem bei gleicher Ansicht wie gemäß Fig. 6 das Dichtungselement 13 weggelassen worden ist, sind radiale Stege 35, 36 nur an den einander gegenüberliegenden Seitenwänden der hier mit 38 bezeichneten Aufnahmenut vorgesehen. Dies reicht im vorliegenden Falle aus, da der Dichtungsring 13 im Nutgrund verhältnismäßig viel Spiel aufweist, so daß ein weiterer Steg im Nutgrund nicht erforderlich ist.

Im Rahmen der Erfindung ist es möglich, den Steg 14 des Dichtungsrings 13 in der Umfangsnut 17 dicht einzusetzen, z.B. durch Kleben oder Klemmen, wenn der Durchgang durch die Rillenfortsetzung gewährleistet ist.

Der Dichtungsring 13 besteht aus Kunststoff. Außerdem bestehen beim vorbeschriebenen Ausführungsbeispiel auch das Gehäuse 2 und der Schraubstopfen 4 aus Kunststoff.

## Ansprüche

1. Isoliergefäß, insbesondere Isolierkanne (1), mit einem Gehäuse (2), dessen Füllraum (27) durch einen mittels einer elastischen Dichtung (13) und einer Dichtfläche (18,19) abgedichteten Deckel (4) verschließbar ist,
dadurch gekennzeichnet,
daß die Dichtungsfläche (18) wenigstens eine, durch eine Unebenheit (28) gebildete Stelle (26) verminderten Anlagedruckes aufweist.

2. Isoliergefäß nach Anspruch 1,
dadurch gekennzeichnet,
daß die Stelle (26) verminderten Anlagedruckes durch eine im wesentlichen radiale Rille (28) oder einen im wesentlichen radialen Steg (28.1) gebildet ist.

3. Isoliergefäß nach Anspruch 1 oder 2,
dadurch gekennzeichnet,
daß die Stelle (26) auf der dem Ausgießer (21) der Isolierkanne (1) abgewandten Seite bzw. der dem Griff (22) zugewandten Seite der Isolierkanne (1) angeordnet ist.

4. Isoliergefäß nach einem der Ansprüche 1 bis 3,
dadurch gekennzeichnet,
daß die Stelle (26) am Gehäuse (2) und/oder am Deckel (4) angeordnet ist.

5. Isoliergefäß nach Anspruch 4, wobei der Deckel ein Schraubdeckel ist,
dadurch gekennzeichnet,
daß der Deckel (4) auf seiner Sichtfläche ein Kennzeichnungselement (24) aufweist, das die Ausgieß-Öffnungsstellung anzeigt.

6. Isoliergefäß nach einem der Ansprüche 1 bis 5,
dadurch gekennzeichnet,

daß das Dichtungselement (13) mit einer sich horizontal oder schräg zur Dichtungsfläche (18) erstreckenden Dichtungslippe mit einer Spannung anliegt, die größer bemessen ist, als die Spannung, die die im Füllraum (27) aufgenommene Flüssigkeit auf die Dichtungslippe (15) ausübt.

7. Isoliergefäß nach Anspruch 6,
dadurch gekennzeichnet,
daß das Dichtungselement (13) eine U- oder Y-förmige Querschnittsform mit radial vorzugsweise nach außen weisenden Dichtungslippen (15,16) aufweist.

8. Isoliergefäß nach einem der Ansprüche 1 bis 7,
dadurch gekennzeichnet,
daß das Dichtungselement (13) in einer Umfangsnut (17) des Deckels (4) aufgenommen ist und die Unebenheit zwischen dem Deckel (4) und dem Dichtungselement (13) angeordnet sowie durch einen Kanal bzw. eine Ausnehmung (29,30,31) mit dem Füllraum (27) des Gefäßes (1) verbunden ist.

9. Isoliergefäß nach einem der Ansprüche 1 bis 8,
dadurch gekennzeichnet,
daß die Unebenheit (Rille 28, Steg 28.1) flach und vorzugsweise gerundet geformt ist.

FIG.1

FIG.2

FIG.3

FIG.4

FIG.5

FIG.6

FIG . 7

Europäisches
Patentamt

**EUROPÄISCHER RECHERCHENBERICHT**

Nummer der Anmeldung

EP  88 11 4827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | EP-A-240604 (ROTPUNKT DR. A. ZIMMERMAN)<br>* das ganze Dokument *<br>--- | 1, 2,<br>4-7, 9 | A47J41/02<br>B65D51/16 |
| Y | FR-A-1101388 (GROSJEAN)<br>* das ganze Dokument *<br>--- | 1, 2,<br>4-7, 9 | |
| A | US-A-3189234 (THOMSON)<br>* das ganze Dokument *<br>--- | 1, 2, 4,<br>9 | |
| A | US-A-3181720 (CASSIE ET AL)<br>* das ganze Dokument *<br>--- | 1, 2, 4,<br>9 | |
| A | US-A-4276990 (CHIODO)<br>* das ganze Dokument *<br>--- | 1, 4, 7 | |
| A | US-A-2753069 (MEESTER)<br>--- | | |
| A | DE-B-1212433 (AB JONKOPINGS VAKUUMINDUSTRI)<br>----- | | |

RECHERCHIERTE
SACHGEBIETE (Int. Cl.4 )

A47J
B65D

Der vorliegende Recherchenbericht wurde für alle Patentansprüche erstellt

| Recherchenort | Abschlußdatum der Recherche | Prüfer |
|---|---|---|
| DEN HAAG | 19 MAI 1989 | MEINDERS H. |